# FASCICULE DE BREVET EUROPEEN

(11) **EP 4 386 245 B1**
(45) Date de publication et mention de la délivrance du brevet: **29.01.2025**
(21) Numéro de dépôt: 23215286.8
(22) Date de dépôt: 08.12.2023
(51) Int. Cl.: F16L 5/00, F16L 5/02

(54) **SYSTÈME DE FIXATION À MANCHON**
BEFESTIGUNGSSYSTEM MIT HÜLSE
SLEEVE ATTACHMENT SYSTEM

(30) Priorité: 16.12.2022 FR 2213534
(43) Date de publication de la demande: 19.06.2024
(73) Titulaire: AIRBUS OPERATIONS (S.A.S.), 31060 Toulouse (FR)
(72) Inventeur: MILLET, Gérard, 31060 TOULOUSE (FR); BROCARD, Marc-Antoine, 31060 TOULOUSE (FR); FOUCART-GAUDY, Simon, 31060 TOULOUSE (FR); DELPY, Vincent, 31060 TOULOUSE (FR)
(74) Mandataire: Airbus-OPS SAS

(56) Documents cités:
- EP-A1- 1 609 637
- US-A1- 2015 010 372
- US-A1- 2021 270 392

## Description

### DOMAINE TECHNIQUE

La présente invention concerne un système de fixation à manchon permettant de fixer des canalisations à travers un support tel qu'une poutrelle, ainsi qu'un ensemble comportant une poutrelle, des canalisations et un tel système de fixation à manchon.

### ÉTAT DE LA TECHNIQUE ANTÉRIEURE

Il existe de nombreux moyens pour fixer des canalisations. Par exemple, dans un aéronef, il existe des poutrelles horizontales et les canalisations, en particulier, les canalisations d'air conditionné, sont fixées aux poutrelles soit au-dessus ou au-dessous de celles-ci.

Du fait du positionnement des canalisations, l'espace au-dessus et au-dessous des poutrelles est encombré, ce qui réduit l'habitabilité de l'aéronef.

En outre, pour fixer les canalisations, il est souvent nécessaire de réaliser des perçages dans les poutrelles pour y fixer des ferrures auxquelles les canalisations sont attachées.

Il est donc nécessaire de trouver un arrangement qui permette de limiter l'encombrement des canalisations et qui évite d'avoir à percer les poutrelles.

EP 1 609 637 A1 divulgue un tuyau de raccordement utilisé dans un système de guidage d'air dans un véhicule. Ce tuyau de raccordement présente un corps tubulaire avec une zone en saillie en forme de bride par laquelle le tuyau de raccordement s'appuie à l'état monté sur un côté d'une paroi. Pour fixer le tuyau de raccordement à la paroi, plusieurs éléments d'arrêt sont répartis sur le pourtour du tube de raccordement. Ces éléments d'arrêt sont essentiellement allongés et constitués d'une bande de matériau flexible.

### EXPOSÉ DE L'INVENTION

Un objet de la présente invention est de proposer un système de fixation à manchon qui est arrangé pour être fixé à l'intérieur d'un trou traversant une poutrelle.

À cet effet, est proposé un système de fixation à manchon destiné à être fixé à une poutrelle percée d'un trou et à recevoir deux canalisations, ledit système de fixation à manchon comportant
- un cylindre dont chaque extrémité est destinée à recevoir par emmanchement une canalisation, où la paroi dudit cylindre est creusée d'au moins un tunnel étanche par rapport à l'intérieur du cylindre, où le cylindre est destiné à être emmanché dans un trou de la poutrelle,
- une collerette solidaire du cylindre et s'étendant autour du cylindre, où chaque tunnel présente une première et une deuxième ouvertures qui débouchent sur l'extérieur de la paroi du cylindre et de part et d'autre de la collerette, où la collerette présente une face d'appui destinée à être en appui contre la poutrelle et une face libre à l'opposé, et
- pour chaque tunnel, un système de maintien comportant un lien, un sabot solidaire d'une première extrémité du lien et un système de verrouillage, où le lien est logé dans le tunnel de manière à ce que le sabot soit bloqué au niveau de la première ouverture qui est du côté de la face libre et à ce que la deuxième extrémité du lien sorte par la deuxième ouverture du côté de la face d'appui et où le système de verrouillage comporte un moyen d'accrochage qui s'accroche à la deuxième extrémité du lien et une surface d'appui destinée à venir en appui contre la poutrelle.

Avec un tel arrangement, les canalisations passent à travers la poutrelle au niveau d'un trou déjà présent.

Avantageusement, le cylindre porte une canalisation de dérivation qui est arrangée du côté de la première ouverture par rapport à la collerette et qui débouche à l'intérieur du cylindre. Avantageusement, le lien prend la forme d'un collier de serrage autobloquant avec des dents, et le moyen d'accrochage présente un cliquet anti-retour qui coopère avec les dents pour bloquer le retrait du lien.

Avantageusement, le cliquet est monté sur un bras élastique du moyen d'accrochage. Avantageusement, le système de maintien comporte un support qui prolonge la surface d'appui vers la collerette et destiné à pénétrer dans le trou en passant entre le toit du tunnel et la surface du trou.

L'invention propose également un ensemble comportant :
- une poutrelle traversée par un trou,
- deux canalisations, et
- un système de fixation à manchon selon l'une des variantes précédentes où le cylindre est emmanché dans le trou et la face d'appui de la collerette est en appui contre la poutrelle, où la surface d'appui est contre la poutrelle, et où une canalisation est emmanchée sur chaque extrémité du cylindre.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] montre une vue en perspective d'un ensemble selon un premier mode de réalisation de l'invention,
[Fig. 2] montre une vue en perspective d'un système de fixation à manchon selon l'invention,
[Fig. 3] montre une vue en coupe et en perspective de l'ensemble de la Fig. 1 par le plan III de la Fig. 1,
[Fig. 4] montre une vue en coupe d'un ensemble selon un deuxième mode de réalisation de l'invention,
[Fig. 5] montre une vue en coupe selon la ligne V-V de la Fig. 4, et
[Fig. 6] montre une vue en coupe d'un ensemble selon un mode de réalisation non revendiqué.

### EXPOSÉ DÉTAILLÉ DE MODES DE RÉALISATION

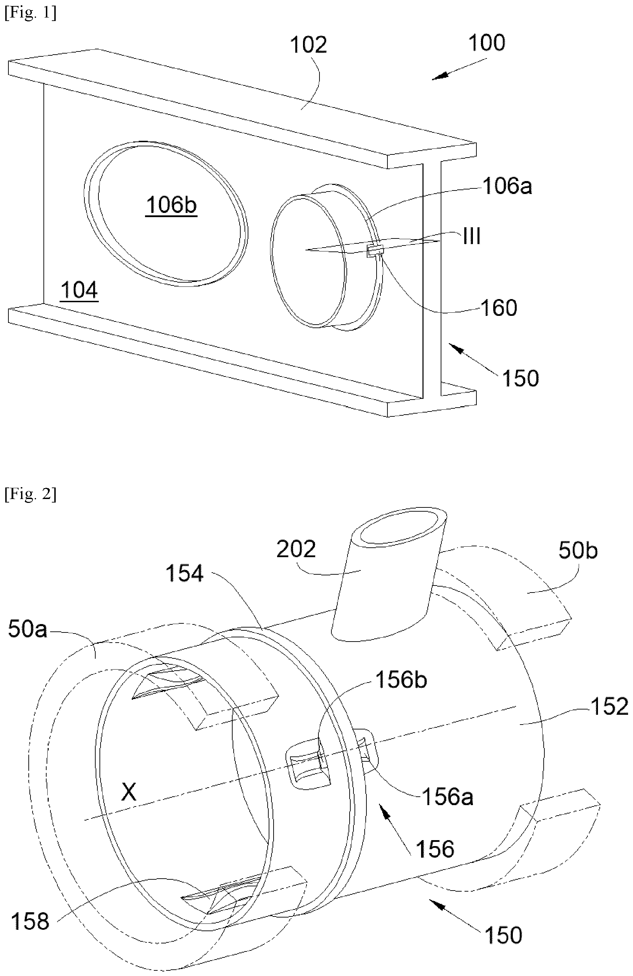

La Fig. 1 montre un ensemble 100 qui comporte une poutrelle 102, ici une poutre de type IPE, mais tout autre type de poutrelles est envisageable.

La poutrelle 102 comporte une âme 104 qui est traversée par au moins un trou 106a-b. Ici, il y a un trou 106a de forme circulaire et un trou 106b de forme elliptique, mais toute forme de trou est possible.

L'ensemble 100 comporte également un système de fixation à manchon 150 dont un mode de réalisation est représenté à la Fig. 2 et qui est fixé à la poutrelle 102 et reçoit deux canalisations 50a-b dudit ensemble 100 qui sont représentées en coupe partielle et en traits fantômes sur la Fig. 2.

Le système de fixation à manchon 150 est constitué d'une collerette 154 et d'un cylindre 152 présentant un axe X. La collerette 154 est solidaire de la paroi du cylindre 152 et s'étend de manière coaxiale autour de ladite paroi du cylindre 152 de manière à former une nervure périphérique extérieure. La collerette 154 est à distance de chaque extrémité du cylindre 152 pour permettre l'emmanchement d'une canalisation 50a-b sur chacune desdites extrémités, c'est-à-dire de part et d'autre de la collerette 154.

La paroi du cylindre 152 est creusée d'au moins un tunnel 156 qui présente une première et une deuxième ouvertures 156a-b qui débouchent sur l'extérieur de la paroi du cylindre 152 et de part et d'autre de la collerette 154. Dans le mode de réalisation de l'invention présenté ici, il y a trois tunnels 156 pour assurer un meilleur maintien du système de fixation à manchon 150 sur l'âme 104. Chaque tunnel 156 s'étend parallèlement à l'axe X.

Dans le cas du transport de fluide à l'intérieur du cylindre 152, chaque tunnel 156 est étanche par rapport à l'intérieur du cylindre 152. Si l'épaisseur de la paroi du cylindre 152 est suffisante, chaque tunnel 156 est creusé dans ladite paroi du cylindre 152 et si l'épaisseur est insuffisante, un renfort 158 est prévu à l'intérieur de la paroi du cylindre 152 afin de délimiter de manière étanche chaque tunnel 156. La paroi du cylindre 152, chaque renfort 158 et le tunnel 156 associé sont réalisés classiquement par moulage d'une matière plastique.

Pour chaque tunnel 156, le système de fixation à manchon 150 comporte un système de maintien 160, 260 dont différents modes de réalisation sont décrits ci-dessous et qui assure la fixation du cylindre 152 sur la poutrelle 102.

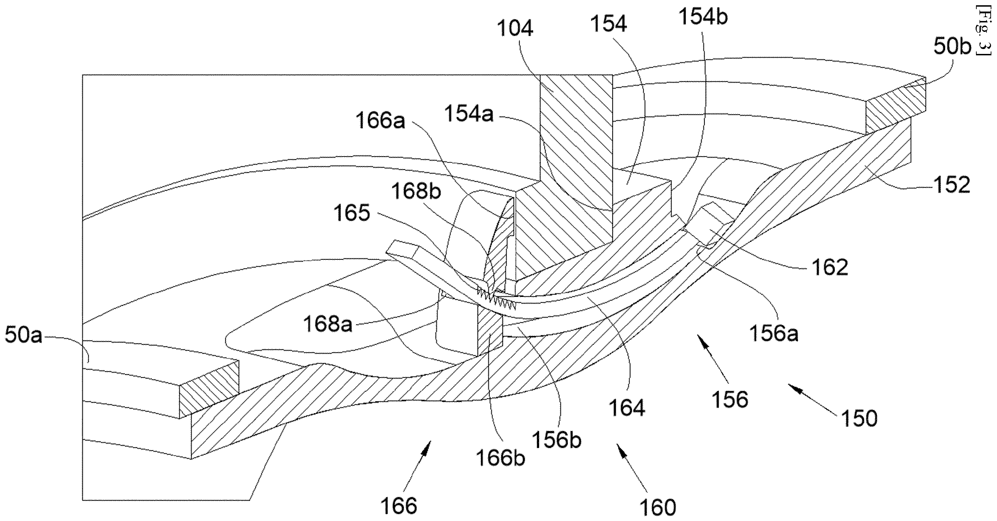

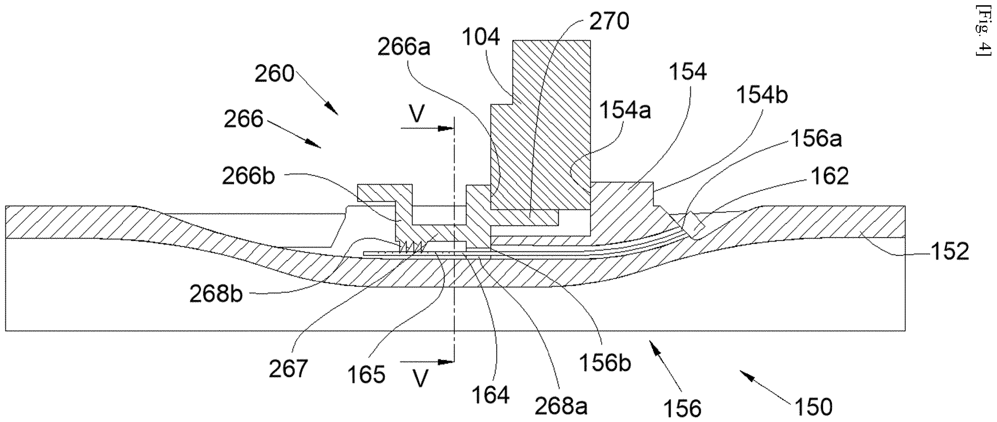

Lors de la mise en place du système de fixation à manchon 150, une extrémité du cylindre 152 est emmanchée dans un trou 106a-b de l'âme 104 de la poutrelle 102 de manière à amener la collerette 154 contre la bordure du trou 106a-b et contre l'âme 104. Le diamètre de la collerette 154 est supérieur à la dimension intérieure du trou 106a-b pour pouvoir s'adosser à la poutrelle 102. La collerette 154 présente ainsi une face d'appui 154a (Figs. 3 et 4) qui est en appui contre la poutrelle 102 et une face libre 154b à l'opposé.

Comme cela est représenté sur les Figs. 3 à 5, le système de maintien 160, 260 comporte un lien 164 et un sabot 162 solidaire d'une première extrémité du lien 164. Le lien 164 est logé dans le tunnel 156 et présente une deuxième extrémité qui est à l'opposé du sabot 162 et qui est introduite dans le tunnel 156 par la première ouverture 156a qui est du côté de la face libre 154b de la collerette 154 pour ressortir par la deuxième ouverture 156b du côté de la face d'appui 154a. Les dimensions du sabot 162 et du tunnel 156 sont telles que le sabot 162 ne peut pas traverser le tunnel 156 et le sabot 162 est ainsi bloqué au niveau de la première ouverture 156a. Le lien 164 est de préférence souple pour faciliter le passage dans le tunnel 156 et sa deuxième extrémité sort par la deuxième ouverture 156b.

Le système de maintien 160, 260 comporte un système de verrouillage 166, 266 qui comporte une surface d'appui 166a, 266a qui, en utilisation, est en appui contre l'âme 104 de la poutrelle 102 à l'opposé de la face d'appui 154a par rapport à la poutrelle 102, et un moyen d'accrochage 166b, 266b qui s'accroche à la deuxième extrémité du lien 164 de manière à bloquer le lien 164 dans le tunnel 156 et ainsi éviter le retrait dudit lien 164 tout en assurant le serrage de la surface d'appui 166a, 266a contre l'âme 104.

Lors de la mise en place, la deuxième extrémité du lien 164 est tirée de manière à bloquer le sabot 162 au niveau de la première ouverture 156a du tunnel 156, puis le système de verrouillage 166, 266 est déplacé le long du lien 164 de sa deuxième extrémité vers sa première extrémité de manière à amener la surface d'appui 166a, 266a contre la poutrelle 102 et ainsi réaliser un serrage de la poutrelle 102 entre la face d'appui 154a de la collerette 154 et la surface d'appui 166a, 266a du système de verrouillage 166, 266. Dans le même temps, le moyen d'accrochage 166b, 266b s'accroche à la deuxième extrémité du lien 164 pour bloquer le sabot 162 et la surface d'appui 166a, 266a.

Chaque canalisation 50a-b est emmanchée de manière étanche sur une extrémité du cylindre 152. L'étanchéité est réalisée par tous moyens appropriés, comme par exemple la mise en place et le serrage d'un serre-joint circulaire autour de la canalisation 50a-b, en particulier dans le cas d'une canalisation50a-b souple, mais l'étanchéité peut également être réalisée par collage, ou la mise en place d'un joint entre le cylindre 152 et la canalisation 50a-b.

Ainsi, le système de fixation à manchon 150 est logé dans un trou 106a-b de la poutrelle 102 et n'empiète plus sur l'espace disponible au-dessus ou au-dessous de ladite poutrelle 102.

Dans le mode de réalisation de l'invention présenté à la Fig. 2, le cylindre 152 porte une canalisation de dérivation 202 qui est arrangée du côté de la première ouverture 156a par rapport à la collerette 154, c'est-à-dire du côté opposé à la face d'appui 154a et qui débouche à l'intérieur du cylindre 152 et permet de connecter fluidiquement une canalisation de dérivation.

La Fig. 3 montre un mode de réalisation particulier du système de maintien 160. Dans ce mode de réalisation, le lien 164 prend la forme d'un collier de serrage autobloquant du type « Ty-Rap » ^{®} par exemple. C'est-à-dire que le lien 164 présente des dents 165 et le moyen d'accrochage 166b présente une fente 168a dans laquelle est inséré le lien 164 et, à l'intérieur de la fente 168a, le moyen d'accrochage 166b présente un cliquet anti-retour 168b qui coopère avec les dents 165 pour bloquer le retrait du lien 164 dès qu'une dent 165 dudit lien 164 est en prise avec ledit cliquet 168b. Le lien 164 est ainsi pris en sandwich entre l'une des faces de la fente 168a et le cliquet 168b.

Selon un mode de réalisation particulier, le moyen d'accrochage 166b comporte un système de désengagement qui permet de désengager le cliquet 168b pour permettre de retirer le lien 164. Un tel système de désengagement est constitué par exemple d'un bras élastique sur lequel est monté le cliquet 168b et le basculement du bras permet alors d'éloigner le cliquet 168b des dents 165 du lien 164.

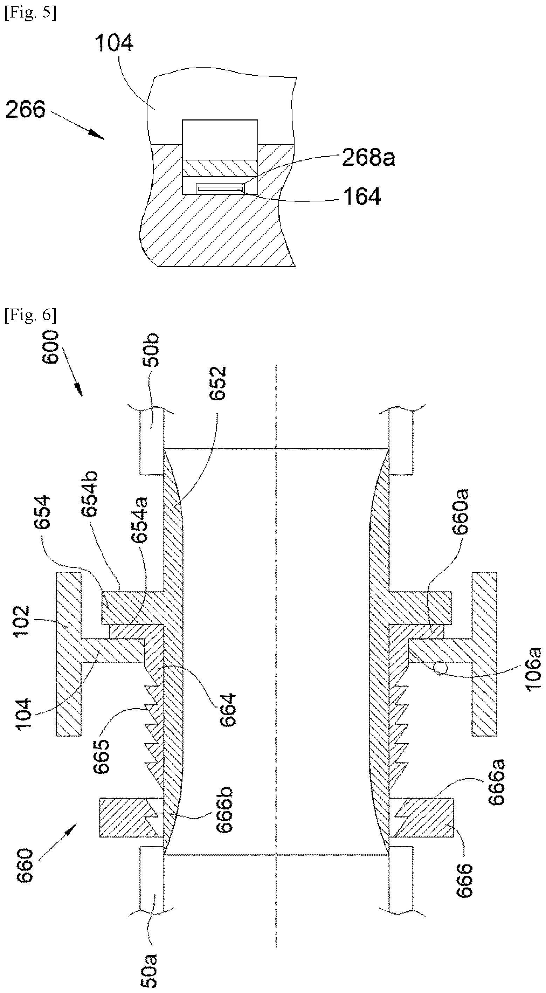

La Fig. 4 et la Fig. 5 montrent un autre mode de réalisation particulier du système de maintien 260. Dans ce mode de réalisation, le lien 164 prend également la forme d'un collier de serrage autobloquant avec ses dents 165 et le moyen d'accrochage 266b présente un passage 268a sous lequel passe le lien 164 entre le toit dudit passage 268a et la paroi du cylindre 152. À la sortie du passage 268a, le moyen d'accrochage 266b comporte un cliquet anti-retour 268b qui coopère avec les dents 165 pour bloquer le retrait du lien 164 dès qu'une dent 165 dudit lien 164 est en prise avec ledit cliquet 268b. Le lien 164 est ainsi pris en sandwich entre la paroi du cylindre 152 et le cliquet 268b.

Dans ce mode de réalisation particulier, le moyen d'accrochage 266b comporte un système de désengagement qui permet de désengager le cliquet 268b pour permettre de retirer le lien 164. Un tel système de désengagement est constitué ici d'un bras élastique 267 du moyen d'accrochage 266b sur lequel est monté le cliquet 268b et le basculement du bras 267 permet alors d'éloigner le cliquet 268b des dents 165 du lien 164.

Dans les modes de réalisation présentés à la Fig. 3, le diamètre du trou 106a-b de l'âme 104 est égal au diamètre du toit du tunnel 156, ce qui assure un bon positionnement du cylindre 152, mais le diamètre du trou 106a-b peut être plus grand comme cela est représenté à la Fig. 4.

Dans ce mode de réalisation, le système de maintien 260 comporte alors un support 270 qui prolonge la surface d'appui 266a vers la collerette 154 et pénètre dans le trou 106a-b de l'âme 104 en passant entre le toit du tunnel 156 et la surface du trou 106a-b. Le toit du tunnel 156 est la partie qui délimite le tunnel 156 et qui est orientée vers l'extérieur du cylindre 152.

Le système de fixation à manchon 150 peut être préassemblé avant son utilisation par introduction du lien 164 dans le tunnel 156 et par mise en place du système de maintien 160, 260 sur le lien 164 dans une position non serrée. Le système de fixation à manchon 150 peut alors être mis en place dans le trou 106a-b de la poutrelle 102 et le système de maintien 160, 260 est actionné pour assurer le serrage.

La Fig. 6 montre un système de fixation à manchon 600 qui est fixé à une poutrelle 102 dont l'âme 104 est percée d'un trou 106a et qui reçoit deux canalisations 50a-b. Le système de fixation à manchon 600 comporte un cylindre 652 dont chaque extrémité reçoit par emmanchement une canalisation 50a-b et le cylindre 652 est emmanché dans le trou 106a de la poutrelle 102.

Le système de fixation à manchon 600 comporte également une collerette 654 solidaire du cylindre 652 et s'étendant autour de ce dernier, où la collerette 654 présente une face d'appui 654a qui est en regard de la poutrelle 102 et une face libre 654b à l'opposé.

Le système de fixation à manchon 600 comporte également un système de maintien 660 comportant une rondelle 660a, en particulier une rondelle souple comme une rondelle Belleville, qui est emmanchée sur le cylindre 652 et se positionne entre la face d'appui 654a et la poutrelle 102.

Le système de fixation à manchon 600 comporte également une pluralité de liens 664 où chacun présente une première extrémité solidaire de la rondelle 660a et une deuxième extrémité libre à l'opposé de la rondelle 660a, où chaque lien 664 prend la forme d'un collier de serrage autobloquant avec des dents 665. Chaque lien 664 s'étale à l'extérieur le long de la paroi du cylindre 652. Chaque lien 664 traverse le trou 106a.

Le système de fixation à manchon 600 comporte également un système de verrouillage 666 comportant un moyen d'accrochage 666b qui s'accroche aux dents 665 à partir de la deuxième extrémité du lien 664 et une surface d'appui 666a qui vient en appui contre la poutrelle 102 de l'autre côté par rapport à la rondelle 660a. Le moyen d'accrochage 666b prend ici la forme d'un cliquet qui coopère avec les dents 665.

## Revendications

1. Système de fixation à manchon (150) destiné à être fixé à une poutrelle (102) percée d'un trou (106a-b) et à recevoir deux canalisations (50a-b), ledit système de fixation à manchon (150) comportant :
- un cylindre (152) dont chaque extrémité est destinée à recevoir par emmanchement une canalisation (50a-b), où la paroi dudit cylindre (152) est creusée d'au moins un tunnel (156) étanche par rapport à l'intérieur du cylindre (152), où le cylindre (152) est destiné à être emmanché dans un trou (106a-b) de la poutrelle (102),
- une collerette (154) solidaire du cylindre (152) et s'étendant autour du cylindre (152), où chaque tunnel (156) présente une première et une deuxième ouvertures (156a-b) qui débouchent sur l'extérieur de la paroi du cylindre (152) et de part et d'autre de la collerette (154), où la collerette (154) présente une face d'appui (154a) destinée à être en appui contre la poutrelle (102) et une face libre (154b) à l'opposé, et
- pour chaque tunnel (156), un système de maintien (160, 260) comportant un lien (164), un sabot (162) solidaire d'une première extrémité du lien (164) et un système de verrouillage (166, 266), où le lien (164) est logé dans le tunnel (156) de manière à ce que le sabot (162) soit bloqué au niveau de la première ouverture (156a) qui est du côté de la face libre (154b) et à ce que la deuxième extrémité du lien (164) sorte par la deuxième ouverture (156b) du côté de la face d'appui (154a) et où le système de verrouillage (166, 266) comporte un moyen d'accrochage (166b, 266b) qui s'accroche à la deuxième extrémité du lien (164) et une surface d'appui (166a, 266a) destinée à venir en appui contre la poutrelle (102).

2. Système de fixation à manchon (150) selon la revendication 1, **caractérisé en ce que** le cylindre (152) porte une canalisation de dérivation (202) qui est arrangée du côté de la première ouverture (156a) par rapport à la collerette (154) et qui débouche à l'intérieur du cylindre (152).

3. Système de fixation à manchon (150) selon l'une des revendications 1 ou 2, **caractérisé en ce que** le lien (164) prend la forme d'un collier de serrage autobloquant avec des dents (165) et **en ce que** le moyen d'accrochage (166b, 266b) présente un cliquet anti-retour (168b, 268b) qui coopère avec les dents (165) pour bloquer le retrait du lien (164).

4. Système de fixation à manchon (150) selon la revendication 3, **caractérisé en ce que** le cliquet (268b) est monté sur un bras élastique (267) du moyen d'accrochage (266b).

5. Système de fixation à manchon (150) selon l'une des revendications 1 à 4, **caractérisé en ce que** le système de maintien (260) comporte un support (270) qui prolonge la surface d'appui (266a) vers la collerette (154) et destiné à pénétrer dans le trou (106a-b) en passant entre le toit du tunnel (156) et la surface du trou (106a-b).

6. Ensemble (100) comportant :
- une poutrelle (102) traversée par un trou (106a-b),
- deux canalisations (50a-b), et
- un système de fixation à manchon (150) selon l'une des revendications précédentes où le cylindre (152) est emmanché dans le trou (106a-b) et la face d'appui (154a) de la collerette (154) est en appui contre la poutrelle (102), où la surface d'appui (166a, 266a) est contre la poutrelle (102), et où une canalisation (50a-b) est emmanchée sur chaque extrémité du cylindre (152).

## Patentansprüche

1. Befestigungssystem mit Hülse (150), das dazu bestimmt ist, an einem Träger (102), der von einem Loch (106a-b) durchbohrt wird, befestigt zu werden und zwei Leitungen (50a-b) aufzunehmen, wobei das Befestigungssystem mit Hülse (150) Folgendes umfasst:
- einen Zylinder (152), von dem jedes Ende dazu bestimmt ist, eine Leitung (50a-b) durch Stecken aufzunehmen, wobei in die Wand des Zylinders (152) mindestens ein Tunnel (156) eingebracht ist, der in Bezug auf das Innere des Zylinders (152) dicht ist, wobei der Zylinder (152) dazu bestimmt ist, in ein Loch (106a-b) des Trägers (102) gesteckt zu werden,
- einen Flansch (154), der mit dem Zylinder (152) fest verbunden ist und sich um den Zylinder (152) herum erstreckt, wobei jeder Tunnel (156) eine erste und eine zweite Öffnung (156a-b) aufweist, die auf der Außenseite der Wand des Zylinders (152) und zu beiden Seiten des Flansches (154) münden, wobei der Flansch (154) eine Anlagefläche (154a), die dazu bestimmt ist, an dem Träger (102) anzuliegen, und gegenüberliegend eine freie Fläche (154b) aufweist, und
- für jeden Tunnel (156), ein Haltesystem (160, 260), das ein Verbindungsglied (164), einen Klotz (162), der mit einem ersten Ende des Verbindungsglieds (164) fest verbunden ist, und ein Verriegelungssystem (166, 266) umfasst, wobei das Verbindungsglied (164) so in dem Tunnel (156) untergebracht ist, dass der Klotz (162) an der ersten Öffnung (156a), die sich auf der Seite der freien Fläche (154b) befindet, blockiert wird und dass das zweite Ende des Verbindungsglieds (164) aus der zweiten Öffnung (156b) auf der Seite der Anlagefläche (154a) austritt, und wobei das Verriegelungssystem (166, 266) ein Fixierungsmittel (166b, 266b), das an dem zweiten Ende des Verbindungsglieds (164) fixiert wird, und eine Anlageoberfläche (166a, 266a), die dazu bestimmt ist, an dem Träger (102) zur Anlage zu kommen, umfasst.

2. Befestigungssystem mit Hülse (150) nach Anspruch 1, **dadurch gekennzeichnet, dass** der Zylinder (152) eine Abzweigleitung (202) trägt, die in Bezug auf den Flansch (154) auf der Seite der ersten Öffnung (156a) eingerichtet ist und im Inneren des Zylinders (152) mündet.

3. Befestigungssystem mit Hülse (150) nach einem der Ansprüche 1 oder 2, **dadurch gekennzeichnet, dass** das Verbindungsglied (164) die Form eines selbstsichernden Klemmbandes mit Zähnen (165) aufweist und dass das Fixierungsmittel (166b, 266b) eine Rücklaufsperre (168b, 268b) aufweist, die mit den Zähnen (165) zusammenwirkt, um den Rückzug des Verbindungsglieds (164) zu blockieren.

4. Befestigungssystem mit Hülse (150) nach Anspruch 3, **dadurch gekennzeichnet, dass** die Sperre (268b) an einem elastischen Arm (267) des Fixierungsmittels (266b) angebracht ist.

5. Befestigungssystem mit Hülse (150) nach einem der Ansprüche 1 bis 4, **dadurch gekennzeichnet, dass** das Haltesystem (260) eine Stütze (270) umfasst, die die Anlageoberfläche (266a) zu dem Flansch (154) hin verlängert und dazu bestimmt ist, in das Loch (106a-b) einzudringen, indem sie zwischen dem Dach des Tunnels (156) und der Oberfläche des Lochs (106a-b) hindurchgeht.

6. Anordnung (100), die Folgendes umfasst:
- einen Träger (102), der von einem Loch (106a-b) durchquert wird,
- zwei Leitungen (50a-b) und
- ein Befestigungssystem mit Hülse (150) nach einem der vorhergehenden Ansprüche, wobei der Zylinder (152) in das Loch (106a-b) gesteckt wird und die Anlagefläche (154a) des Flansches (154) an dem Träger (102) anliegt, wobei sich die Anlageoberfläche (166a, 266a) an dem Träger (102) befindet und wobei eine Leitung (50a-b) auf jedes Ende des Zylinders (152) gesteckt ist.

## Claims

1. Sleeve fastening system (150) intended to be fastened to a joist (102) pierced with a hole (106a-b) and to receive two pipes (50a-b), said sleeve fastening system (150) having:
- a cylinder (152) of which each end is intended to receive a pipe (50a-b) by fitting, wherein the wall of said cylinder (152) has at least one tunnel (156) cut into it that is sealed with respect to the inside of the cylinder (152), wherein the cylinder (152) is intended to be fitted into a hole (106a-b) in the joist (102),
- a flange (154) as one with the cylinder (152) and extending around the cylinder (152), wherein each tunnel (156) has a first and a second opening (156a-b) that both emerge outside the wall of the cylinder (152) and on either side of the flange (154), wherein the flange (154) has a bearing face (154a) intended to bear against the joist (102) and a free face (154b) opposite, and
- for each tunnel (156), a holding system (160, 260) having a link (164), a shoe (162) as one with a first end of the link (164) and a locking system (166, 266), wherein the link (164) is housed in the tunnel (156) such that the shoe (162) is blocked at the first opening (156a) that is on the side of the free face (154b) and such that the second end of the link (164) exits via the second opening (156b) on the side of the bearing face (154a) and wherein the locking system (166, 266) has an attachment means (166b, 266b) that attaches to the second end of the link (164) and a bearing surface (166a, 266a) intended to come to bear against the joist (102).

2. Sleeve fastening system (150) according to Claim 1, **characterized in that** the cylinder (152) bears a bypass pipe (202) that is arranged on the side of the first opening (156a) with respect to the flange (154) and that emerges inside the cylinder (152).

3. Sleeve fastening system (150) according to either of Claims 1 and 2, **characterized in that** the link (164) takes the form of a self-locking clamping collar with teeth (165) and **in that** the attachment means (166b, 266b) has a non-return ratchet (168b, 268b) that cooperates with the teeth (165) so as to block the withdrawal of the link (164).

4. Sleeve fastening system (150) according to Claim 3, **characterized in that** the ratchet (268b) is mounted on an elastic arm (267) of the attachment means (266b).

5. Sleeve fastening system (150) according to one of Claims 1 to 4, **characterized in that** the holding system (260) has a support (270) that extends the bearing surface (266a) towards the flange (154) and is intended to penetrate into the hole (106a-b), passing between the roof of the tunnel (156) and the surface of the hole (106a-b).

6. Assembly (100) having:
- a joist (102) passed through by a hole (106a-b),
- two pipes (50a-b), and
- a sleeve fastening system (150) according to one of the preceding claims wherein the cylinder (152) is fitted into the hole (106a-b) and the bearing face (154a) of the flange (154) bears against the joist (102), wherein the bearing surface (166a, 266a) is against the joist (102), and wherein a pipe (50a-b) is fitted onto each end of the cylinder (152).
